# EUROPEAN PATENT SPECIFICATION

(11) **EP 1 073 566 B1**
(45) Date of publication and mention of the grant of the patent: **12.03.2003**
(21) Application number: 99919519.1
(22) Date of filing: 19.04.1999
(51) Int. Cl.: B60N 2/44

(54) **Seat cover for motor cars**
Sitzbezüge für Autositze
Couvre-siège

(30) Priority: 23.04.1998 IT PR980023
(43) Date of publication of application: 07.02.2001
(73) Proprietor: Cortellazzi, Giovanni, I-43052 Colorno (IT)
(72) Inventor: Cortellazzi, Giovanni, I-43052 Colorno (IT)
(74) Representative: Gotra, Stefano
(86) International application number: IT9900095
(87) International publication number: WO99054163

(56) References cited:
- EP-A2- 0 368 438
- DE-A- 1 920 529
- DE-A- 2 050 954
- GB-A- 1 152 267
- US-A- 2 227 180

## Description

### TECHNICAL FIELD AND BACKGROUND ART.

The present invention relates to a seat cover with a width of cloth in the form of a net or meshwork. As is known, the practice of covering motor-car seats, with the aim of protecting the original seat upholstery and providing greater comfort during travel, has become widespread.

For this purpose, in fact, cushions and back supports or matting which allow ventilation of the scat and the back in the zones against which the human body rests have been provided.

Seat covers formed by central widths of cloth, to which lateral strips are stitched, have been provided, said lateral strips being designed to cover the front and side zones of the scat as well as the side edges of the backrest.

In some seat covers the lateral strips are formed as one piece with the central widths of cloth made of fabric with a close-set weft and warp and stitched where necessary.

In order to achieve more effective ventilation, it is necessary to ensure that at least the portion of the upper width of cloth in contact with the human body is woven in a meshwork so as to achieve suitable ventilation which allows, especially during the summer season, but also in any climatic conditions, the part of the body in contact therewith to be kept ventilated. from EP-A-0 368 438 (which correrponds to the preamble of claim 1) it is known a cover member for a vehicle seat and back having smooth curved and contoured rounded corners obtained by a first and a second cover member sewn together and turned inside out.

From GB-A-1 152 267 it is known a Seat cover made up of a seat portion and side portion sewn together to form the shape of the seat to be covered.

Besides from DE-A-2 050 954 it is known a seat cover defining a meshwork with a grid-like shape that allow to achieve elasticity in all directions.

### DISCLOSURE OF INVENTION.

The object of the seat cover accordins to present invention is that of allowing correct ventilation of the body, as well as ensuring perfect adherence of the seat cover also in the side, front and top zones, respectively, of the seat and the backrest without having to apply additional reinforcing strips which are sewn in the side zones of the backrest and the seat.

Said objects are fully achieved by the seat cover for motor cars of the type referred to above which is characterized by the technical features as set forth in the characterising part of independent claim 1. Further features of the invention are disclosed in the dependent claims.

### BRIEF DESCRIPTION OF DRAWINGS.

The characteristic features and advantages will appear more clearly from the following description of a preferred embodiment illustrated, purely by way of a non-limiting example of embodiment in the accompanying drawings, in which:
- Figure 1 shows a perspective view of a car seat to which the seat cover in question has been applied;
- Figure 2 shows in schematic form a plan view of a meshwork for forming the seat cover according to the present invention;
- Figure 3 shows a plan view of a meshwork width of cloth according to a possible variation of embodiment;
- Figure 4 shows a type of meshwork used for forming the width of cloth in accordance with an example of embodiment;
- Figure 5 shows a type of meshwork used for forming the width of cloth according to a possible variation of embodiment;
- Figure 6 shows another example of the seat cover.

### BEST MODE FOR CARRYING OUT THE INVENTION.

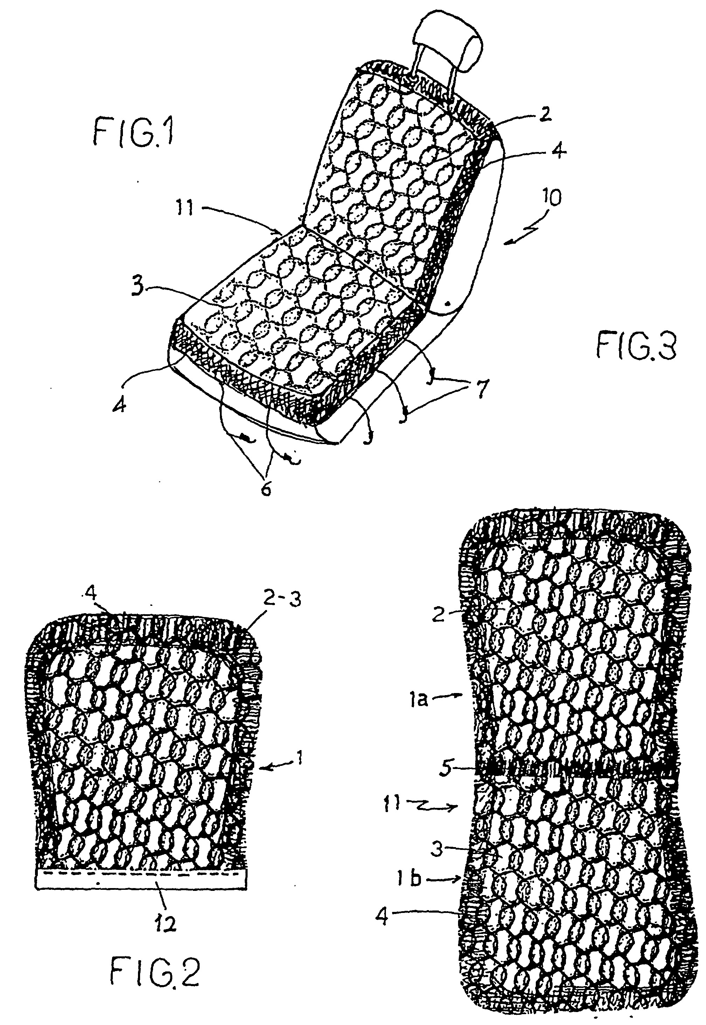

As shown in Figure 1, 10 denotes in its entirety a car seat to which a seat cover 11 has been applied, said seat cover 11 being formed by a first width of cloth 1a which has an upper central portion 2 with transverse and longitudinal dimensions more or less corresponding to those of the backrest of the seat of a motor car.
1b denotes a second with of cloth which has a lower central portion 3 with longitudinal and transverse dimensions more or less corresponding to those of the seat of a motor car. In general, the transverse dimension of the two portions coincides, while the longitudinal dimension of the upper central portion is greater than the longitudinal dimension of the lower portion.

The two central portions 1a and 1b are surrounded by a reinforced perimetral strip 4 woven simultaneously with the two central portions so as to be seamless. In the example shown in Figure 2, the width of cloth in the region of the end zone, does not have reinforcements, but a strip 12 is applied to it by means of stitching, said strip being designed to be inserted between seat and backrest during assembly of the seat cover. On the other hand, in the example according to Figure 3, reference sign 5 denotes a reinforced central strip which is made in a similar manner to the strip 4 and intended to divide the two portions and which coincides with the dividing zone between backrest and seat. The upper portion and lower portion and the reinforced strips are made as one seamless piece.

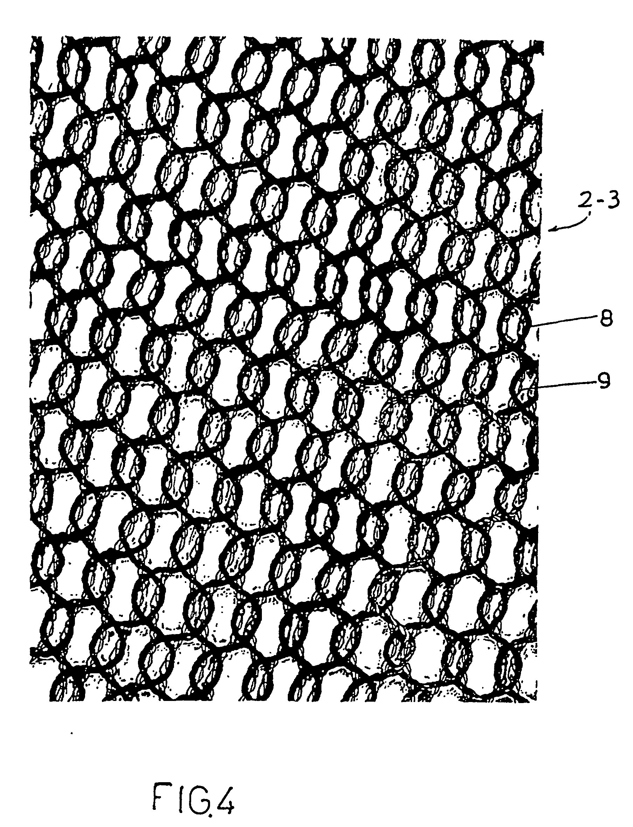

The two central portions are made in the form of a meshwork, for example of the type illustrated in Figure 4. The meshwork consists of a series of unconnected colums or vertical rows of chains 9 of synthetic fibre and a plurality of threads 8 arranged in only vertical, coil-like fashion which are interlinked with the vertical chains and which cross each other.

The design of the meshwork is not altered with longitudinal tensioning of the meshwork itself, owing to the presence of the unextendable thread chain while it can be deformed by transverse tensioning.

The coiled threads 8 are threads arranged vertically. The result is a loosely woven fabric which allows maximum ventilation and maximum extensibility only in the transverse direction and non at all in the longitudinal direction. Thus, the cover can adapt extremely well to the shape of the seat

The reinforced strips are woven simultaneously, covering the meshwork with. other interlacing threads or with a vertical chain and transverse threads or with interlacing threads underneath the meshwork bound to the vertical chain.

Depending on the shape of the various seats, the portion 2 or both the portions have four rounded reinforcing comers on the top side of the backrest and/or the front side of the seat. The perimetral strips 4 are positioned along the perimetral edges of the seat and elastic elements 6 provided with hooks 7 are connected to said strips in order to fasten and tension the seat cover

A width of cloth or a coloured fabric fixed to said widths of cloth by means of stitching or heat-welding may be advantageously provided underneath the widths of cloth 1a and 1b in order to prevent dust from reaching the seat.

The central meshwork portion of the width of cloth 1 may be made according to the shape and size of the seat and/or the backrest of the motor vehicle.

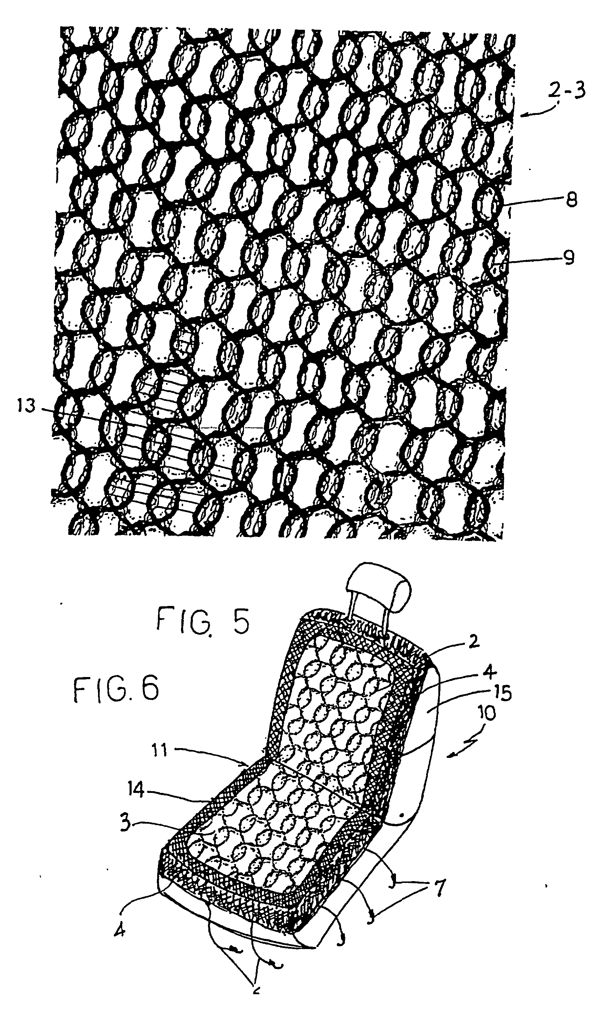

With reference to Figure 5, it is possible to note a thread 13 which binds together the chains passing in zig-zag fashion between two adjacent chains in the zone underneath the meshwork threads 8.

Said thread 13 makes the width of cloth less elastic in the transverse direction and acts as a thread for loosely bonding the chains. Figure 6 shows, in another embodiment of the invention, a portion of fabric 14 that covers the sides of the seat cover and backrest, said portion 14 being stitched to the perimetral edge of said width of cloth of the seat (1A) and of the backrest (1B) in the reinforcement zone.

The reinforcing strip is obtained using horizontal weft threads bound to the vertical chains or using weft threads packed closely together between adjacent warp chains of the series of colum and interlinked with the chains themselves Reference signe 15 denotes a piece of fabric stitched to the upper portion 2 and designed to cover partially the backrest of the seat.

According to a possible variation of embodiment, the reinforcement could be provided only on the side zones of the backrest and the seat and not on the front zone of the seat or the top zone of the backrest.

## Claims

1. Seat cover comprising:
a first width of cloth with (1a) having an upper central portion in the form of meshwork (2) with transverse and longitudinal dimensions corresponding more or less to those of the front part of the backrest of a motor car; a second with of cloth (1b) having a lower central portion in the form of a meshwork (3) with transverse and longitudinal dimensions corresponding more or less to those of the seat of a motor car;
**characterized in that** the first and second widths of cloth (1a,1b) are surrounded by a reinforced perimetral strip (4) woven simultaneously with the two central portions so as to be seamless,the upper and lower portions consisting of a meshwork (8) linked together with an unextendable vertical chain (9).

2. Seat cover according to Claim 1, **characterized in that** both the withs of cloth in the region of the zone where seat and backrest are joined together, do not have reinforcing strips formed simultaneously during weaving, but have a strip (12) applied by means of stitching.

3. Seat cover according to Claim 1, **characterized in that** it comprises a width of cloth consisting of a single meshwork woven simultaneously with a reinforced central strip (5) located between upper portion and lower portion of the seat cover and in the zone where seat and backrest are joined together.

4. Seat cover according to Claim 1, **characterized in that** the upper portion and the lower portion consist of a meshwork linked together with the vertical chain (9), and a horizontal weft thread (13) which joins together the adjacent chains (9) is provided, said (B) being arranged underneath the meshwork threads (8).

5. Seat cover according to Claim 1, **characterized in that** the perimetral reinforced strip which surrounds each meshwork portion has a length such that it covers, in addition to the sides of the seat and the backrest, also a perimetral edge of the seat and the backrest.

## Patentansprüche

1. Sitzbezüge für Autositze umfassend:
eine erste Stoffbahn (la) mit einem oberen als Gitterstoff ausgebildeten (2) Mittelbereich, dessen Abmessungen in Quer- und Längsrichtung in etwa den Abmessungen der Vorderseite der Rückenlehne eines Autositzes entsprechen;
eine zweite Stoffbahn (1b) mit einem unteren, als Gitterstoff (3) ausgebildeten Mittelbereich, dessen Abmessungen in Quer- und Längsrichtung in etwa den Abmessungen des Autositzes entsprechen,
**dadurch gekennzeichnet, dass** die erste und zweite Stoffbahn (1a, 1b) von einem verstärkten umlaufenden Streifen (4) umgeben ist, der zusammen mit den beiden Mittelbereichen gewoben wird und daher nahtlos ist, wobei der obere und der untere Bereich aus einem Gitterstoff (8) bestehen, der von einer senkrechten nicht dehnbaren Kette (9) zusammengehalten wird.

2. Sitzbezüge nach Anspruch 1, **dadurch gekennzeichnet, dass** die beiden Stoffbahnen in dem Bereich des Abschnittes, wo die Sitzfläche mit der Rückenlehne verbunden ist, keine gleichzeitig beim Weben hergestellte Verstärkungsstreifen aufweisen, sondern einen angenähten Verstärkungsstreifen (12) haben.

3. Sitzbezug nach Anspruch 1, **dadurch gekennzeichnet, dass** er eine aus einem einzigen Gitterstoff bestehende Stoffbahn umfasst, die gleichzeitig mit einem zwischen dem oberen und dem unteren Bereich des Sitzbezugs sowie in dem Bereich, wo die Sitzfläche mit der Rückenlehne verbunden ist, angeordneten verstärkten Mittelstreifen (5) gewoben wird.

4. Sitzbezug nach Anspruch 1, **dadurch gekennzeichnet, dass** der obere Bereich und der untere Bereich aus einem Gitterstoff bestehen, der durch die vertikale Kette (9) zusammengehalten wird und ein horizontaler, die nebeneinander liegenden Ketten (9) verbindender Schussfaden (13) vorgesehen ist, wobei der genannte Schussfaden (13) unterhalb der Fäden des Gitterstoffes (8) angeordnet ist.

5. Sitzbezug nach Anspruch 1, **dadurch gekennzeichnet, dass** der umlaufende verstärkte, jeden Bereich des Gitterstoffes umgebenden Streifen eine derartige Länge aufweist, dass er zusätzlich zu den Seiten der Sitzfläche und Rückenlehne auch einen umlaufenden Rand der Sitzfläche und Rückenlehne bedeckt.

## Revendications

1. Un couvre-siège comprenant:
- une première bande de tissu (la) ayant une portion centrale supérieure en forme de filet (2) avec des dimensions transversales et longitudinales correspondant plus ou moins à celles de la partie frontale du dossier d'une automobile;
- une seconde bande de tissu (1b) ayant une portion centrale inférieure en forme de filet (3) avec des dimensions transversales et longitudinales correspondant plus ou moins à celle du siège d'une automobile;
**caractérisé en ce que** la première et seconde bande de tissu (la, 1b) sont entourées par une bande périmétrale renforcée (4) tissée simultanément aux deux portions centrales de manière à ne présenter aucune couture, les portions supérieure et inférieure, consistant en un filet (8), étant reliées par une chaîne verticale (9) extensible.

2. Un couvre-siège selon la revendication 1,
**caractérisé en ce que** les deux bandes de tissu, dans la zone dans laquelle le siège et le dossier se joignent, présentent une bande (12) appliquée au moyen d'une couture, et non pas des bandes renforcées formées simultanément pendant le tissage.

3. Un couvre-siège selon la revendication 1,
**caractérisé en ce qu'**il comprend une bande de tissu consistant en un seul filet tissé simultanément avec une bande centrale renforcée (5) située entre la portion supérieure et la portion inférieure du couvre-siège dans la zone dans laquelle se joignent le siège et le dossier.

4. Un couvre-siège selon la revendication 1,
**caractérisé en ce que** la portion supérieure et la portion inférieure consistent en des filets reliés entre eux par la chaîne verticale (9), et **en ce qu'**est prévu un fil de trame horizontal (13) qui relie entre elles les chaînes adjacentes (9), ledit fil de trame (13) étant disposé au-dessous des fils du filet (8).

5. Un couvre-siège selon la revendication 1,
**caractérisé en ce que** la bande périmétrale renforcée, qui entoure chaque portion de filet, présente une longueur telle qu'elle couvre, outre les côtés du siège et du dossier, également un bord périmétrale du siège et du dossier.
